# FASCICULE DE BREVET EUROPEEN

(11) **EP 1 571 387 B1**
(45) Date de publication et mention de la délivrance du brevet: **02.05.2007**
(21) Numéro de dépôt: 05356041.3
(22) Date de dépôt: 04.03.2005
(51) Int. Cl.: F16L 25/01, H01R 13/645

(54) **Raccord de jonction amovible et procédé de raccordement correspondant**
Verbinder zum lösbaren Verbinden und entsprechendes Verfahren zum Verbinden
Connector for disconnectable connection and corresponding method of connection

(30) Priorité: 05.03.2004 FR 0402356
(43) Date de publication de la demande: 07.09.2005
(73) Titulaire: STÄUBLI FAVERGES, 74210 Faverges (FR)
(72) Inventeur: Tiberghien, Alain-Christophe, 74320 Sevrier (FR); Chappaz, René, 74210 Faverges (FR)
(74) Mandataire: Myon, Gérard Jean-Pierre

(56) Documents cités:
- DE-A- 2 646 063
- DE-B- 1 187 435
- FR-A- 2 065 938

## Description

La présente invention concerne un raccord pour la jonction amovible de canalisations, ainsi qu'un procédé de jonction d'un tel raccord.

Il est connu d'alimenter des machines, ou plus généralement des installations, avec des fluides et/ou de l'électricité en vue d'actionner ou de contrôler ces installations. Cette alimentation est permise par des canalisations interrompues au niveau de raccords permettant leur remontage amovible et ainsi l'alimentation temporaire de l'installation.

Pour une installation comportant de nombreux points de jonction, il est courant que plusieurs raccords ayant sensiblement les mêmes dimensions globales puissent être utilisés successivement. Cependant, il importe de ne pas mélanger les fluides et/ou l'électricité d'alimentation de l'installation, ce qui pourrait conduire à son endommagement et/ou à un fonctionnement incorrect. C'est pourquoi, il est connu de repérer les raccords d'alimentation par des références alphanumériques et/ou par des couleurs facilement mémorisables.

Une autre solution consiste à équiper les différents raccords d'une même installation avec des moyens de détrompage adaptés pour apparier, par complémentarité de formes, les deux éléments d'un raccord donné, prévus pour être emmanchés l'un dans l'autre. Un exemple de tels moyens de détrompage est donné dans DE-B-11 87 435. Dans ce document, selon la nature du fluide destiné à circuler dans un raccord associé, l'un des éléments de ce raccord est pourvu d'une pluralité d'ergots s'étendant suivant une direction transversale à la direction d'emmanchement du raccord, selon une configuration associé au fluide, tandis que l'autre élément est muni d'un nombre correspondant de fentes sensiblement complémentaires à ces ergots de manière à permettre de mettre bout à bout les deux éléments de façon adéquate. Lorsqu'on tente d'emmancher l'un dans l'autre deux éléments non appariés, au moins l'un des ergots du premier élément risque de ne pas pouvoir être introduit dans une fente correspondante, empêchant ainsi une jonction incorrecte.

Bien que ces ergots et fentes soient efficaces pour détromper les raccords, ils présentent l'inconvénient d'être coûteux et difficiles à réaliser puisque chaque élément de chaque raccord doit être usiné à la demande. De plus, l'utilisateur de ces raccords se doit de disposer d'au moins un élément de rechange pour chaque élément de chaque raccord au cas où l'un de ces éléments devait être endommagé, ce qui nécessite un stock important d'éléments.

Un autre exemple de moyens de détrompage est donné dans DE-A-26 46 063. Dans ce document, on a recours à un système d'ergots et de fentes de détrompage sensiblement analogue à celui de DE-B-11 87 435, auquel est associé un unique couple nervure/rainure destiné à indexer angulairement les deux éléments du raccord à emmancher l'un dans l'autre. Le raccord proposé par DE-A-26 46 063 se révèle contraignant à utiliser car, en cas de difficulté à emmancher deux raccords l'un dans l'autre, l'opérateur ne sait pas s'il tente de raccorder deux éléments non appariés ou bien si, bien que manipulant deux éléments de raccord appariés, il positionne angulairement ces éléments de manière inadéquate.

Par ailleurs, pour des installations situées dans des environnements dangereux, tels que les sites de retraitement de déchets nucléaires ou de démantèlement de centrales nucléaires, ces opérations de raccordement s'effectuent généralement à distance, au moyen de robots qui manipulent les éléments à raccorder et de caméras qui transmettent à l'opérateur des images plus ou moins nettes des mouvements de ces robots. Dans ces conditions, les risques pour l'opérateur d'intervertir accidentellement les éléments appariés de raccords différents sont très importants. En outre, des moyens de détrompage tels que ceux proposés dans DE-B-11 87 435 sont inadaptés d'un point de vue de tenue en service car ils ne présentent pas une résistance mécanique suffisante aux efforts développés par les robots de manipulation, accentuant les problèmes de coût et de stock évoqués ci-dessus. De plus, la difficulté d'utilisation des éléments de raccord de DE-A-26 46 063 évoquée plus haut est d'autant plus gênante en raison de la lenteur et du manque de sensibilité des robots de manipulation, ainsi que de la mauvaise visibilité.

Le but de la présente invention est de proposer un raccord amovible qui, tout en facilitant les jonctions admissibles et en évitant les jonctions incorrectes des éléments de ce raccord, limite les contraintes de stock et de fabrication associées. L'invention se propose également avantageusement de garantir une utilisation plus commode et une plus grande résistance du raccord à l'égard d'une manipulation par des robots ou analogues, qui sont moins sensibles qu'un opérateur humain.

A cet effet, l'invention a pour objet un raccord pour la jonction amovible de deux canalisations ou analogues, comprenant deux éléments propres à être emmanchés l'un dans l'autre selon un axe d'emmanchement et des moyens de détrompage portés par les deux éléments et adaptés pour apparier les deux éléments par complémentarité de formes, caractérisé en ce qu'il comporte en outre des moyens d'indexage angulaire des deux éléments, portés par les deux éléments et adaptés pour positionner angulairement l'un par rapport à l'autre les deux éléments avant que les moyens de détrompage, au moins en partie reliés aux deux éléments de façon amovible et configurable, ne coopèrent entre eux lors de l'emmanchement de ces éléments.

Grâce à ces moyens de détrompage configurables, c'est-à-dire dont le nombre et/ou l'emplacement des composants peuvent être librement choisis par l'utilisateur, les deux éléments d'un raccord donné sont appariés sur site ou à la livraison. Autrement dit, l'utilisateur peut ne posséder sur site qu'un petit stock de pièces de maintenance lui permettant de configurer à volonté les deux éléments de raccord standards, usinés préalablement en série. De même, le fournisseur peut ne prévoir qu'un stock réduit d'éléments de raccord, qu'il configure ensuite facilement et rapidement à la demande, par les moyens de détrompage. Lors de leur manipulation, éventuellement par un robot, les éléments de raccord sont facilement positionnés angulairement l'un par l'autre, avant que les moyens de détrompage soient sollicités. Ainsi, l'opérateur est assuré que, au moment où il teste la complémentarité de formes des parties des moyens de détrompage respectivement portées par les deux éléments, ces deux éléments ont préalablement été angulairement agencés de manière correcte par les moyens d'indexage.

Suivant d'autres caractéristiques de ce raccord, prises isolément ou selon toutes les combinaisons techniquement possibles :
- les moyens de détrompage comprennent :
   - au moins un relief adapté pour être solidarisé de manière amovible à un premier des deux éléments,
   - pour chaque relief, une zone de passage du relief lors de l'emmanchement des éléments, portée par le second élément, et
   - des moyens d'obturation sélective du ou de chaque zone de passage, adaptés pour être solidarisés de manière amovible au second élément ;
- le ou chaque relief présente une forme allongée suivant l'axe d'emmanchement ;
- chaque zone de passage est délimitée au moins en partie par une pièce rapportée de manière amovible sur le second élément ;
- les moyens d'obturation comportent, pour chaque zone de passage à obturer, un obturateur associé, notamment sous forme d'une bille, ladite zone de passage se présentant sous la forme d'une cavité de réception axiale et d'immobilisation radiale et orthoradiale de l'obturateur ;
- les moyens d'obturation définissent au moins une surface d'appui sur le second élément, ladite surface s'opposant à un mouvement selon une direction sensiblement parallèle à l'axe d'emmanchement ;
- les moyens d'indexage comportent au moins un relief solidaire du premier élément et dont au moins une partie est décalée, suivant l'axe d'emmanchement, par rapport au ou à chaque relief de détrompage ;
- les deux éléments sont globalement de forme tubulaire et la face extérieure de l'un des éléments est étagée de manière sensiblement complémentaire à la face intérieure étagée de l'autre élément, de sorte que, lors de l'emmanchement des éléments l'un dans l'autre, ces faces étagées coopèrent pour rendre sensiblement co-axiaux les deux éléments.

L'invention a également pour objet un procédé de jonction de deux éléments propres à s'emmancher l'un dans l'autre suivant un axe d'emmanchement, ces éléments étant globalement de forme tubulaire et portant des moyens de détrompage adaptés pour apparier les deux éléments par complémentarité de formes et des moyens d'indexage angulaire des deux éléments, ce procédé étant caractérisé par les étapes successives suivantes durant lesquelles :
- on rapproche les deux éléments l'un de l'autre en les positionnant de manière approximative, par exemple visuellement, éventuellement à l'aide d'une caméra, ou selon un mouvement relatif prédéterminé, en particulier selon des instructions préprogrammées de commande d'un robot de manipulation des éléments ;
- on engage les deux éléments l'un autour de l'autre en les rendant sensiblement co-axiaux par coopération de la face extérieure étagée de l'un des éléments avec la face intérieure étagée de façon complémentaire de l'autre,
- on ajuste en rotation autour de l'axe d'emmanchement l'un des éléments par rapport à l'autre jusqu'à ce que les parties des moyens d'indexage angulaire respectivement portées par ces éléments coopèrent l'une avec l'autre,
- on déplace, suivant un mouvement rectiligne parallèle à l'axe d'emmanchement, l'un des éléments par rapport à l'autre jusqu'à ce que les parties des moyens de détrompage respectivement portées par ces deux éléments coopèrent l'une avec l'autre, et
- si lesdites parties respectives des moyens de détrompage sont complémentaires l'une de l'autre, on poursuit dans le même sens le déplacement rectiligne de l'un des éléments par rapport à l'autre.

Suivant une caractéristique additionnelle avantageuse de ce procédé, lors de l'étape de rapprochement des deux éléments, on positionne angulairement de manière approximative l'un des éléments par rapport à l'autre en observant, suivant globalement l'axe d'emmanchement, un organe de visée porté par l'un des éléments par rapport à un ergot associé porté par l'autre élément.

L'invention sera mieux comprise à la lecture de la description qui va suivre, donnée uniquement à titre d'exemple et faite en se référant aux dessins, sur lesquels :
- la figure 1 est une vue éclatée en perspective d'un élément mâle d'un raccord selon l'invention ;
- la figure 2 est une vue en coupe longitudinale de l'élément mâle de la figure 1, à l'état assemblé ;
- la figure 3 est une vue en élévation suivant la flèche III indiquée à la figure 2, le plan de coupe de la figure 2 étant noté II-II sur la figure 3 ;
- la figure 4 est une vue analogue à la figure 1, d'un élément femelle du raccord selon l'invention apparié à l'élément mâle de la figure 1 ;
- la figure 5 est une coupe longitudinale de l'élément femelle de la figure 4, dans un état non assemblé ;
- la figure 6 est une vue en élévation selon la flèche VI indiquée à la figure 5, à l'état assemblé de l'élément femelle, le plan de coupe de la figure 5 étant noté V-V sur la figure 6 ;
- la figure 7 est une vue analogue aux figures 2 et 5, illustrant l'emmanchement de la partie mâle des figures 1 à 3 dans la partie femelle des figures 4 à 6 ; et
- la figure 8 est une vue analogue à la figure 7, illustrant l'emmanchement de la partie mâle des figures 1 à 3 dans un élément femelle non apparié.

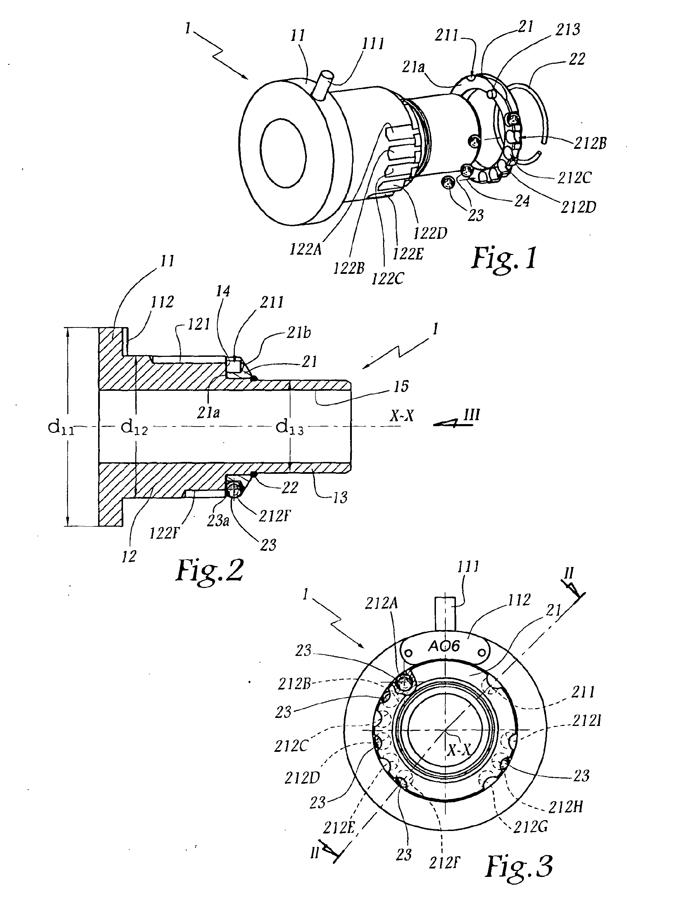

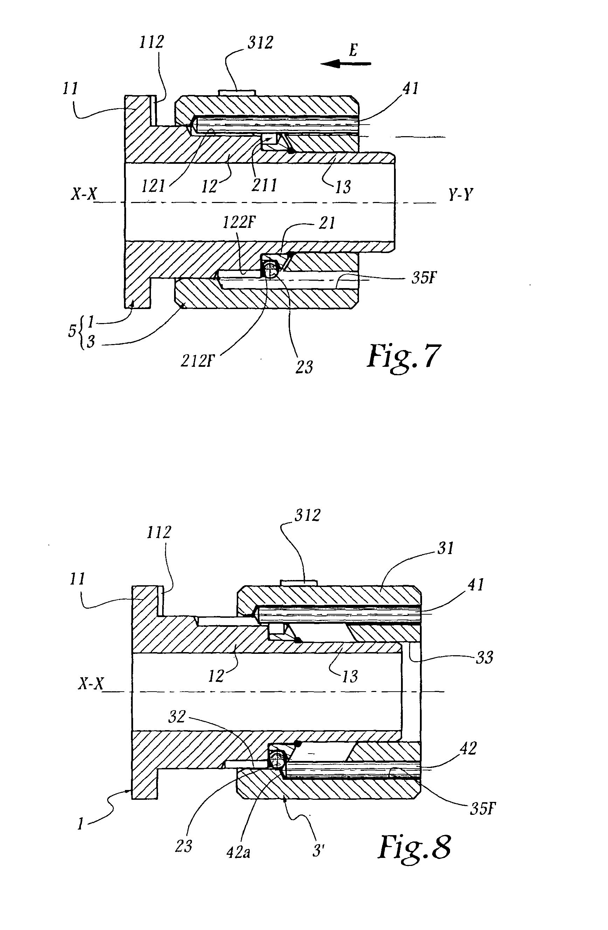

Sur les figures 1 à 3 est représenté un élément mâle 1 d'un raccord 5 représenté à la figure 7. Cet élément mâle 1 présente une forme globale tubulaire d'axe longitudinal X-X. Il est destiné à recevoir intérieurement des câbles, des connecteurs électriques, des conduites de fluides ou analogues, non représentés, à même d'être raccordés de manière étanche et/ou isolés à des composants respectivement complémentaires lors de la jonction du raccord 5 détaillée ci-après.

Par commodité, la suite de la description des figures 1 à 3 sera orientée en considérant que la direction « arrière » correspond à celle dirigée vers la gauche aux figures 1 et 2, la direction « avant » étant à l'opposé. De cette façon, la figure 3 correspond à la face avant de l'élément 1.

L'élément mâle 1 comporte un corps globalement cylindrique à base circulaire d'axe X-X, composé de trois parties successives étagées. Ce corps comporte ainsi une bride d'extrémité arrière 11, une partie courante cylindrique 12 et une partie avant cylindrique 13, de diamètres extérieurs respectifs d₁₁, d₁₂ et d₁₃ décroissants, l'épaulement formé entre les parties 12 et 13 étant référencé 14. Sur toute sa longueur, ce corps est traversé de part en part par un alésage central 15 de diamètre sensiblement constant et prévu pour loger les câbles, connecteurs et/ou conduites évoqués ci-dessus.

La bride d'extrémité 11 est munie, en un point de sa périphérie, d'un ergot 111 radialement saillant vers l'extérieur, ainsi que d'une plaque d'identification 112 portant la référence alpha-numérique « A06 ».

La surface extérieure de la partie courante 12 est creusée de plusieurs rainures longitudinales dont les extrémités arrière respectives sont borgnes et dont les extrémités avant respectives débouchent sur l'extérieur au niveau de l'épaulement 14. Parmi ces rainures, on distingue une rainure, référencée 121, plus longue que les autres rainures identiques, au nombre de neuf et respectivement référencées 122A, 122B, ..., 122I. En coupe transversale, les rainures 121 et 122A à 122I présentent chacune un profil en arc de cercle.

L'élément mâle 1 est prévu pour être équipé d'une bague annulaire 21, ou rondelle, à rapporter de manière coaxiale autour de la partie avant 13. Plus précisément, cette bague 21 possède un diamètre intérieur sensiblement égal au diamètre extérieur de la partie avant 13 et un diamètre extérieur sensiblement égal à celui de la partie courante 12. Elle est prévue pour être enfilée autour de la partie 13 jusqu'à ce que sa face arrière 21a vienne en butée axiale contre l'épaulement 14, un jonc 22 de retenue axiale vers l'avant étant rapporté dans une gorge annulaire correspondante creusée dans cette partie 13.

Suivant sa périphérie, la bague 21 est creusée de plusieurs cavités identiques, débouchant toutes à la fois sur les faces arrière 21a et avant 21b de la bague et sur la tranche périphérique extérieure de la bague. Lorsque la bague 21 est rapportée sur l'élément mâle 1, ces cavités sont prévues pour être disposées dans le prolongement axial des rainures 121 et 122A à 122I de sorte que chaque extrémité avant de ces rainures débouche directement dans une de ces cavités. On distingue de la sorte, parmi ces cavités, une cavité 211 disposée dans le prolongement de la rainure 121 et neuf autres cavités 212A à 212I disposées respectivement dans le prolongement des rainures 122A à 122I. Pour garantir que chaque cavité soit bien disposée dans le prolongement de sa rainure associée lorsque la bague 21 est rapportée sur l'élément mâle 1, la face arrière 21a est par exemple munie d'un pion axialement saillant 213 (figure 1) destiné à venir s'encliqueter dans un logement borgne correspondant, creusé axialement dans l'épaulement 14.

Les cavités 212A à 212I de la bague 21 sont adaptées pour pouvoir recevoir chacune une bille d'obturation 23. Pour l'élément mâle 1 des figures 1 à 3, cinq de ces neuf cavités, à savoir les cavités 212A, 212B, 212D, 212F et 212H, reçoivent ainsi une bille 23.

En coupe transversale, le contour des cavités 212A à 212I est prévu pour épouser de manière sensiblement complémentaire le contour circulaire des billes 23 sur plus de 180°, de manière à immobiliser ainsi la bille à la fois suivant une direction radiale et toutes les directions orthoradiales par rapport à l'axe X-X. De plus, le côté arrière de chaque cavité est plus ouvert que son côté avant de manière à pouvoir librement introduire une bille 23 dans la cavité depuis la face arrière 21a de la bague 21, suivant une trajectoire rectiligne sensiblement parallèle à l'axe X-X, indiquée par une flèche 24 à la figure 1, tout en empêchant que cette bille ne s'échappe par l'avant. Lorsque la bague 21 est rapportée sur l'élément mâle 1, les billes 23 disposées dans les cavités 212A, 212B, 212D, 212F et 212H sont en appui axial contre l'épaulement 14, le diamètre de ces billes étant sensiblement égal à la dimension axiale des cavités.

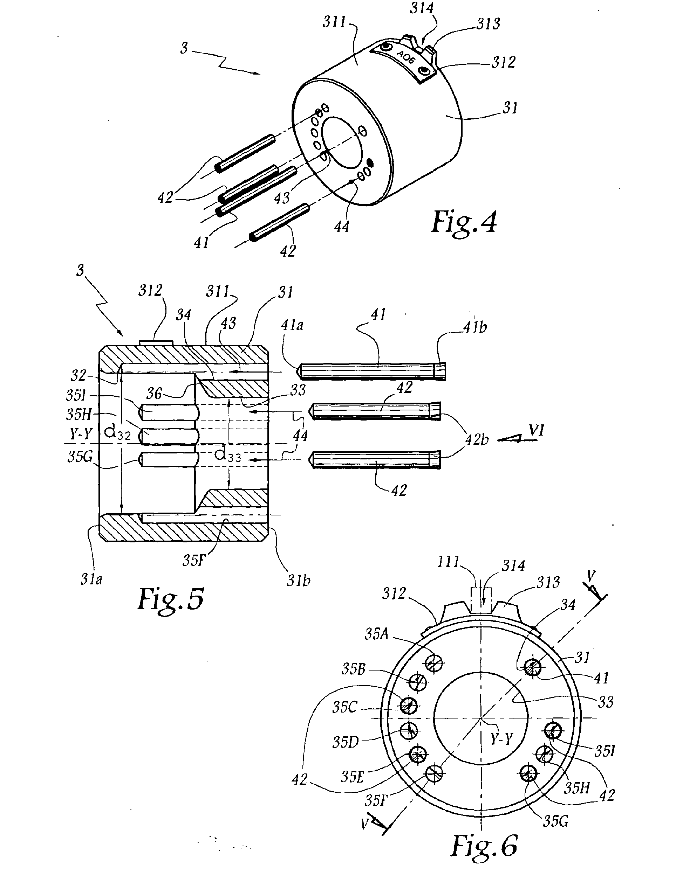

Sur les figures 4 à 6 est représenté un élément femelle 3 du raccord 5 de la figure 7, présentant une forme globale tubulaire d'axe Y-Y. L'élément mâle 1 des figures 1 à 3 et l'élément femelle 3 des figures 4 à 6 sont destinés à être emmanchés l'un dans l'autre grâce à un mouvement de rapprochement relatif globalement parallèle à leur axe X-X et Y-Y, comme expliqué en détail plus loin.

Par commodité, la suite de la description des figures 4 à 6 sera orientée en considérant que la direction « avant » correspond à la direction dirigée vers le lecteur à la figure 4 et dirigée vers la droite à la figure 5, la direction « arrière » étant en sens opposé. Ainsi, la figure 6 correspond à la face avant de l'élément 3.

L'élément femelle 3 comporte un corps tubulaire 31 présentant une face extérieure 311 sensiblement cylindrique à base circulaire d'axe Y-Y et de diamètre sensiblement égal au diamètre extérieur d₁₁ de la bride d'extrémité 11 de l'élément mâle 1. Cette face extérieure 311 est munie à la fois d'une plaque d'identification 312 portant la référence alphanumérique « A06 » et d'un organe de visée 313. Cet organe de visée 313 comporte deux branches identiques en saillie de la face 311, disposées l'une derrière l'autre suivant la périphérie du corps 31 et délimitant entre-elles un espace de visée 314 de section transversale en forme de U. La base de cet espace 314 présente une dimension périphérique sensiblement égale au diamètre de l'ergot 111 de la bride d'extrémité 11.

Intérieurement, le corps 31 de l'élément femelle 3 délimite sur toute sa longueur un alésage étagé constitué d'une partie arrière 32 et d'une partie avant 33, toutes deux cylindriques à base circulaire d'axe Y-Y et reliée l'une à l'autre par une zone de transition 36 évasée. Le diamètre intérieur d₃₃ de la partie avant 33 est strictement inférieur au diamètre intérieur d₃₂ de la partie arrière 32 et est sensiblement égal au diamètre extérieur d₁₃ de la partie avant 13 du corps de l'élément mâle 1, tandis que le diamètre intérieur d₃₂ de la partie arrière 32 est sensiblement égal au diamètre extérieur d₁₂ de la partie courante 12 de l'élément mâle.

Le corps 31 est également creusé de plusieurs orifices 34, 35A à 35I cylindriques à base circulaire, d'axes respectifs parallèles à l'axe Y-Y et dont les extrémités avant débouchent librement sur la face avant 31b du corps 31 tandis que leur extrémité arrière sont borgnes. En coupe transversale, les axes de ces orifices sont disposés suivant un cercle centré sur l'axe Y-Y et de diamètre sensiblement égal au diamètre intérieur de la partie alésée arrière 32 de sorte que les parties arrière de ces orifices débouchent radialement dans cette partie arrière 32, la longueur des orifices étant plus grande que celle de la partie alésée avant 33. De plus, ces orifices sont répartis, en coupe transversale, de manière analogue aux rainures 121 et 122A à 122I.

Parmi les orifices précités, on distingue un orifice 34 de longueur supérieure aux autres orifices au nombre de neuf et référencés respectivement 35A à 35I.

Ces orifices 34 et 35A à 35I sont adaptés pour, chacun, recevoir et immobiliser de manière amovible une goupille sensiblement complémentaire. Plus précisément, pour l'élément femelle 3 représenté, l'orifice 34 reçoit une goupille 41, comme indiqué par la flèche 43, tandis que les orifices 35C, 35E, 35G et 35I reçoivent chacun une goupille identique 42, de longueur inférieure à la goupille 41, comme indiqué par les flèches 44. Chacune de ces goupilles 41 et 42 présente un diamètre extérieur sensiblement égal au diamètre intérieur des orifices correspondants, excepté au niveau de, par exemple, leur extrémité avant 41b, 42b (c'est-à-dire leur extrémité située au niveau de la face avant 31b du corps 31 lorsque les goupilles sont reçues entièrement dans les orifices correspondants) qui présente un diamètre extérieur légèrement supérieur. De la sorte, les extrémités avant 41b, 42b de ces goupilles forment des surfaces respectives de coincement amovible à l'intérieur des orifices 31.

La jonction de l'élément mâle 1 des figures 1 à 3 avec l'élément femelle 3 des figures 4 à 6 va maintenant être décrite en considérant par exemple que cette opération de jonction est effectuée au moyen d'un robot de manipulation de l'élément femelle 3 alors que l'élément mâle 1 est déjà, par exemple au niveau de sa face arrière, solidarisé fermement à une console ou une machine non représentée.

Dans un premier temps, l'élément femelle 3 est totalement indépendant de l'élément mâle 1. Au moyen du robot précité, éventuellement équipé d'une caméra embarqué, l'opérateur rapproche l'élément femelle de l'élément mâle et le positionne d'abord au bout de l'élément mâle de manière approximative en vue d'introduire la partie avant 13 de l'élément 1 dans l'alésage arrière 32 de l'élément 3, sans pour l'instant chercher à les emmancher l'un dans l'autre. La comparaison visuelle des références des plaques d'identification 112 et 312 permet à l'opérateur de s'assurer de l'appariement a priori correct des deux éléments.

En observant ensuite ces éléments suivant globalement l'axe X-X, l'opérateur entraîne en rotation autour de son axe Y-Y l'élément femelle 3 de façon à ce que l'ergot 111 de la bride d'extrémité 11 de l'élément mâle 1 soit disposé sensiblement au centre de l'espace de visée 314 délimité par l'organe de visée 313 de l'élément femelle. Cette position relative de l'ergot 111 est représentée en traits fantômes à la figure 6. Dans cette configuration, l'utilisateur sait que les éléments 1 et 3 sont grossièrement positionnés angulairement de manière convenable l'un par rapport à l'autre.

Il commande alors le robot suivant une direction E sensiblement parallèle à l'axe X-X et dirigée vers l'arrière, de manière à ce que la partie arrière 32 de l'alésage central du corps 31 de l'élément femelle 3 s'engage autour de la partie avant 13 du corps de l'élément mâle 1. Même si le positionnement radial relatif entre les éléments 1 et 3 n'est qu'approximatif, la différence entre la dimension extérieure de cette partie avant 13 et la dimension intérieure de cette partie arrière 32 est suffisante pour que ce premier mouvement de rapprochement axial s'effectue sans difficulté. De plus, la zone de transition évasée 36 guide radialement l'élément femelle lors de son rapprochement axial et les zones arrière des parties 32 et 33 se centrent respectivement sur les zones avant des parties 12 et 13 de manière à confondre les axes X-X et Y-Y. Autrement dit, la coopération de la face extérieure étagée de l'élément mâle et la face intérieure étagée de l'élément femelle permet de rendre co-axiaux ces éléments.

En poursuivant ce mouvement de rapprochement axial, le robot amène l'extrémité arrière 41a de la goupille 41 contre la face avant 21b de la bague 21, empêchant alors la poursuite de l'emmanchement des éléments 1 et 3. Dans la mesure où ce contact s'effectue suivant une direction sensiblement parallèle à l'axe X-X et que les pièces en contact sont fermement retenue suivant cette direction, la faible capacité de détection du contact par le robot, c'est-à-dire sa « sensibilité », vis-à-vis d'un opérateur humain n'est pas dommageable aux éléments à raccorder.

L'opérateur commande ensuite au robot d'entraîner à nouveau en rotation autour de son axe Y-Y l'élément femelle 3, tout en maintenant une commande d'entraînement vers l'arrière de cet élément jusqu'à ce que la goupille 41 s'engage à l'intérieur de la cavité 211 et de la rainure 121. Pour ce faire, l'opérateur travaille par tâtonnement sachant que, de par le repérage visuel préalable au moyen de l'ergot 111 et de l'organe de visée 313, la goupille 41 est en pratique disposée, tout du moins angulairement, à peu près dans le prolongement de cette rainure 121. Dans cet état, le positionnement radial des éléments 1 et 3 est quant à lui assuré par la coopération à la fois de la partie alésée arrière 32 de l'élément femelle 3 avec la partie courante 12 de l'élément mâle 1 et de la partie alésée avant 33 avec la partie avant 13.

Une fois l'extrémité arrière 41a de la goupille 41 engagée dans l'extrémité avant de la rainure 121, l'élément femelle 3 est angulairement et radialement indexé par rapport à l'élément mâle 1 de façon à ce que ses orifices 35A à 35I soient respectivement disposés exactement dans le prolongement axial des rainures 122A à 122I de l'élément mâle.

L'utilisateur commande alors à nouveau le rapprochement axial vers l'arrière E de l'élément femelle par rapport à l'élément mâle jusqu'à ce que les extrémités arrière 42a des goupilles 42 arrivent axialement au niveau de la bague 21. Dans la mesure où les cavités 212C, 212E, 212G et 212I ne sont pas obturées par des billes 23, les goupilles 42 passent au travers de ces cavités et le mouvement d'introduction axial de l'élément femelle autour de l'élément mâle se poursuit sans être gêné jusqu'aux extrémités arrière borgnes de ces rainures. Les éléments 1 et 3 sont alors dans la configuration de la figure 7, c'est-à-dire emmanchés l'un dans l'autre, impliquant la connexion et/ou le raccordement des différents câbles, connecteurs ou conduites fluidiques non représentés disposés à l'intérieur de ces éléments.

Une fois cet emmanchement réalisé, des moyens de verrouillage réversible non représentés peuvent être prévus pour solidariser fermement l'un à l'autre les éléments 1 et 3.

On comprend ainsi que la présence combinée des goupilles 42, des cavités 212A, 212B, 212D, 212F et 212H obturées par les billes 23 et des autres cavités 212C, 212E, 212G et 212I autorisant le passage des goupilles 42 lors de l'emmanchement des éléments 1 et 3 permet de s'assurer du bon appariement entre les éléments mâle et femelle du raccord à obtenir. Ces composants permettent en quelque sorte d'obtenir une clé de détrompage dont la vérification s'effectue uniquement suivant le mouvement axial E entre les éléments mâle et femelle. Ils constituent de la sorte une garantie de sécurité supplémentaire à la simple comparaison visuelle des plaques d'identification 112 et 312, qui peut être oubliée ou difficilement réalisable lorsque la jonction du raccord a lieu à distance, avec caméra, avec visibilité réduite ou dans un environnement encombré.

Pour illustrer ce point, on a représenté sur la figure 8 l'élément mâle 1 des figures 1 à 3 et un élément femelle 3' non apparié à l'élément mâle 1. Cet élément femelle 3' comporte le même corps 31 que l'élément femelle 3, mais, à la différence de l'élément 3, comporte une goupille supplémentaire 42 à l'intérieur de l'orifice 35F du corps 31. Lorsqu'on tente d'emmancher l'élément 3' autour de l'élément 1 alors que leur positionnement angulaire et radial a déjà été réalisé au moyen de la goupille d'indexage 41 comme expliqué ci-dessus, l'extrémité arrière 42a de la goupille supplémentaire 42 vient s'appuyer axialement contre la bille 23 disposée dans la cavité 212F de la bague 21, comme représenté dans la partie basse de la figure 8. Il est alors impossible de poursuivre le déplacement axial relatif de ces éléments. On notera que l'empêchement de ce rapprochement est, dans ce cas, uniquement assuré la coopération de la goupille supplémentaire 42 et de la bille 23 de la cavité 212F, ce qui constitue un blocage efficace et résistant puisqu'une partie de la surface extérieure 23a de cette bille est en appui axial contre l'épaulement 14 du corps de l'élément mâle 1. Les moyens de détrompage utilisés sont donc adaptés pour la manipulation des éléments à raccorder par des robots ou analogues qui ne risquent pas a priori d'endommager ces éléments en raison de leur faible sensibilité.

Dans la mesure où la bague 21 est amovible par rapport au corps de l'élément mâle et où les goupilles 42 sont solidarisées de manière amovible au corps de l'élément femelle, il est facile et rapide pour l'utilisateur de configurer à la demande le détrompage de ces corps d'éléments mâle et femelle de manière à se constituer plusieurs raccords à configuration propre. A titre d'exemple, avec les neuf possibilités d'obturation par les billes 23 et les neuf possibilités d'implantation des goupilles 42, cent vingt six configurations possibles de détrompage sont envisageables.

Divers aménagements et variantes au raccord 5 décrit ci-dessus sont également envisageables :
- dans la mesure où la coopération de la goupille 41 et de la rainure associée 121 est essentiellement destinée à permettre le positionnement angulaire relatif des éléments mâle et femelle lors de leur emmanchement, il n'est pas nécessaire que la cavité correspondante 211 de la bague 21 soit géométriquement identique aux cavités 212A à 212I puisque cette cavité 211 n'est pas a priori destinée à recevoir une bille 23 ;
- d'autres moyens de solidarisation amovible des goupilles 42 au corps 31 de l'élément femelle 3 sont envisageables ; à titre d'exemple, il peut être prévu que ces goupilles portent un filetage extérieur complémentaire d'un taraudage prévu dans les orifices 35A à 35I ou bien que ces goupilles soient emmanchées à force dans les orifices 35A à 35I en étant chacune bloquer à leur extrémité avant, par rapport à l'élément femelle 3 par un circlips ou analogue ;
- l'agencement rainures 122A à 122I/goupilles 42 peut être inversé par rapport aux éléments mâle 1 et femelle 3 ;
- dans la mesure où les goupilles de configuration 42 sont « lues » au niveau de la bague 21, c'est-à-dire sont testées quant à leur possibilité de passer à travers les cavités 212A à 212I à condition que ces dernières ne soient pas obturées, il n'est pas nécessaire de prévoir, pour chaque goupille, une rainure propre 122A à 122I, toutes ces rainures pouvant au contraire être remplacées par un unique creusement périphérique de la partie courante 12 de l'élément mâle 1, qui s'étendrait, en coupe transversale, sur un arc correspondant à l'arc qui relie la rainure 122A à la rainure 122I en passant par les autres rainures ;
- d'autres formes de reliefs configurables que les goupilles de configuration 42 décrites ci-dessus sont possibles ; par exemple, ces reliefs peuvent être constitués de pions solidarisés de manière amovible à l'élément femelle 3 de manière à s'étendre, en longueur, suivant une direction radiale par rapport à l'axe Y-Y, avec une extrémité de chaque pion en saillie radiale de la face intérieure du corps 31 ; et/ou
- de même d'autres formes d'obturateurs configurables que les billes 23 sont possibles ; par exemple, à la place des cavités 212A à 212I, la bague 21 peut être traversée axialement par des logements cylindriques répartis suivant sa périphérie aux mêmes emplacements que les cavités 212A à 212I et des bouchons amovibles seraient alors prévus pour obturer les logements cylindriques précités, notamment en y étant introduits par la face arrière 21a de la bague alors que cette dernière ne serait pas encore rapportée sur l'élément mâle 1 ; suivant encore une autre forme selon l'invention, associée en particulier à l'exemple de variante des reliefs configurables envisagée ci-dessus, les obturateurs configurables sont directement solidarisés individuellement à l'élément mâle 1, sans utiliser la bague 21 ; dans ce cas, le corps de l'élément mâle 1 définit directement les zones de passage des goupilles 42 lors de l'emmanchement des éléments 1 et 3, fonctionnellement analogues aux cavités 212A à 212I et les obturateurs sont alors prévus pour boucher sélectivement certaines de ces zones de passage, en étant par exemple vissés dans le corps de l'élément mâle 1 de manière à ce qu'une partie d'extrémité des obturateurs s'étendent en travers des zones de passage sélectionnées, notamment selon une direction radiale par rapport à l'axe X-X.

## Revendications

1. Raccord (5) pour la jonction amovible de deux canalisations comprenant deux éléments (1, 3) propres à être emmanchés l'un dans l'autre selon un axe d'emmanchement (X-X) et des moyens de détrompage (23, 42, 212A à 212I) portés par les deux éléments et adaptés pour apparier les deux éléments par complémentarité de formes, **caractérisé en ce qu**'il comporte en outre des moyens (41, 121) d'indexage angulaire des deux éléments (1, 3), portés par les deux éléments et adaptés pour positionner angulairement l'un par rapport à l'autre les deux éléments avant que les moyens de détrompage (23, 42, 212A à 212I), au moins en partie reliés aux deux éléments (1, 3) de façon amovible et configurable, ne coopèrent entre eux lors de l'emmanchement de ces éléments.

2. Raccord suivant la revendication 1, **caractérisé en ce que** les moyens de détrompage comprennent :
- au moins un relief (42) adapté pour être solidarisé de manière amovible à un premier (3) des deux éléments (1, 3),
- pour chaque relief (42), une zone (212A à 212I) de passage du relief lors de l'emmanchement des éléments (1, 3), portée par le second élément (1), et
- des moyens (23) d'obturation sélective du ou de chaque zone de passage (212A à 212I), adaptés pour être solidarisés de manière amovible au second élément (1).

3. Raccord suivant la revendication 2, **caractérisé en ce que** le ou chaque relief (42) présente une forme allongée suivant l'axe d'emmanchement (X-X).

4. Raccord suivant l'une des revendications 2 ou 3, **caractérisé en ce que** la ou chaque zone de passage (212A à 212I) est délimitée au moins en partie par une pièce (21) rapportée de manière amovible sur le second élément.

5. Raccord suivant l'une quelconque des revendications 2 à 4, **caractérisé en ce que** les moyens d'obturation (23) comportent, pour chaque zone de passage à obturer (212A à 212I), un obturateur associé (23), notamment sous forme d'une bille, ladite zone de passage se présentant sous la forme d'une cavité (212A à 212I) de réception axiale et d'immobilisation radiale et orthoradiale de l'obturateur.

6. Raccord suivant l'une quelconque des revendications 2 à 5, **caractérisé en ce que** les moyens d'obturation (23) définissent au moins une surface (23a) d'appui sur le second élément (1), ladite surface s'opposant à un mouvement selon une direction sensiblement parallèle à l'axe d'emmanchement (X-X).

7. Raccord suivant l'une quelconque des revendications 2 à 6, **caractérisé en ce que** les moyens d'indexage comportent au moins un relief (41) solidaire du premier élément (3) et dont au moins une partie (41a) est décalée, suivant l'axe d'emmanchement (X-X), par rapport au ou à chaque relief de détrompage (42).

8. Raccord suivant l'une quelconque des revendications précédentes, **caractérisé en ce que** les deux éléments (1, 3) sont globalement de forme tubulaire et **en ce que** la face extérieure de l'un (1) des éléments est étagée de manière sensiblement complémentaire à la face intérieure étagée de l'autre élément (3), de sorte que, lors de l'emmanchement des éléments l'un dans l'autre, lesdites faces étagées coopèrent pour rendre sensiblement co-axiaux les deux éléments.

9. Procédé de jonction de deux éléments (1, 3) d'un raccord selon l'une quelconque des revendications 1 à 8, lesdits éléments étant propres à s'emmancher l'un dans l'autre suivant un axe d'emmanchement (X-X), ces éléments étant globalement de forme tubulaire et portant des moyens de détrompage (23, 42, 212A à 212I) adaptés pour apparier les deux éléments par complémentarité de formes et des moyens (41, 121) d'indexage angulaire des deux éléments, ce procédé étant **caractérisé par** les étapes successives suivantes durant lesquelles :
- on rapproche les deux éléments (1, 3) l'un de l'autre en les positionnant de manière approximative,
- on engage les deux éléments (1, 3) l'un autour de l'autre en les rendant sensiblement co-axiaux par coopération de la face extérieure étagée de l'un (1, 3) des éléments avec la face intérieure étagée de façon complémentaire de l'autre (3, 1),
- on ajuste en rotation autour de l'axe d'emmanchement (X-X) l'un (1, 3) des éléments par rapport à l'autre (3, 1) jusqu'à ce que les parties des moyens d'indexage angulaire (41, 121) respectivement portées par ces éléments coopèrent l'une avec l'autre,
- on déplace, suivant un mouvement rectiligne parallèle à l'axe d'emmanchement (X-X), l'un (1, 3) des éléments par rapport à l'autre (3, 1) jusqu'à ce que les parties des moyens de détrompage (23, 42, 212A à 212I) respectivement portées par ces deux éléments coopèrent l'une avec l'autre, et
- si lesdites parties respectives des moyens de détrompage (23, 42, 212A à 212I) sont complémentaires l'une de l'autre, on poursuit dans le même sens le déplacement rectiligne (E) de l'un (1, 3) des éléments par rapport à l'autre (3, 1).

10. Procédé suivant la revendication 9, **caractérisé en ce que** lors de l'étape de rapprochement des deux éléments (1, 3), on positionne angulairement de manière approximative l'un des éléments par rapport à l'autre en observant, suivant globalement l'axe d'emmanchement (X-X), un organe de visée (313) porté par l'un (3) des éléments par rapport à un ergot associé (111) porté par l'autre élément (1).

## Claims

1. Connector (5) for the disconnectable connection of two conduits, comprising two elements (1, 3) which are suitable for being fitted one into the other according to a fitting axis (X - X) and error-prevention means (23, 42, 212A to 212I) which are carried by the two elements and adapted to pair the two elements by complementarity of shape, **characterised in that** it comprises furthermore means (41, 121) for angular indexing of the two elements (1, 3) which are carried by the two elements and adapted to position the two elements angularly one relative to the other before the error-prevention means (23, 42, 212A to 212I), at least partially connected to the two elements (1, 3) in a disconnectable and configurable manner, cooperate between themselves during fitting of these elements.

2. Connector according to claim 1, **characterised in that** the error-prevention means comprise:
- at least one relief (42) which is adapted to be made integral in a disconnectable manner to a first (3) of the two elements (1, 3),
- for each relief (42), a zone (212A to 212I) for passage of the relief during fitting of the elements (1, 3), carried by the second element (1), and
- means (23) for selective sealing of the or each passage zone (212A to 212I), which are adapted to be made integral in a disconnectable manner to the second element (1).

3. Connector according to claim 2, **characterised in that** the or each relief (42) has an elongated shape following the fitting axis (X - X).

4. Connector according to one of the claims 2 or 3, **characterised in that** the or each passage zone (212A to 212I) is delimited at least partially by a part (21) which is connected in a disconnectable manner on the second element.

5. Connector according to any of the claims 2 to 4, **characterised in that** the sealing means (23) comprise, for each passage zone to be sealed (212A to 212I), an associated seal (23), in particular in the form of a ball, said passage zone appearing in the form of a cavity (212A to 212I) for axial reception and radial and orthoradial immobilisation of the seal.

6. Connector according to any of the claims 2 to 5, **characterised in that** the sealing means (23) define at least one support surface (23a) on the second element (1), said surface opposing a movement according to a direction substantially parallel to the fitting axis (X - X).

7. Connector according to any of the claims 2 to 6, **characterised in that** the indexing means comprise at least one relief (41) which is integral with the first element (3) and at least one part (41a) of which is offset according to the fitting axis (X - X) relative to the or each error-prevention relief (42).

8. Connector according to any of the preceding claims, **characterised in that** the two elements (1, 3) are overall of a tubular shape and **in that** the exterior face of one (1) of the elements is stepped in a manner substantially complementary to the interior stepped face of the other element (3) so that, during fitting of the elements one into the other, said stepped faces cooperate in order to make the two elements substantially co-axial.

9. Method for connecting two elements (1, 3) of a connector according to any of the claims 1 to 8, said elements being suitable for being fitted one into the other according to a fitting axis (X - X), these elements being overall of a tubular shape and carrying error-prevention means (23, 42, 212A to 212I) which are adapted to pair the two elements by complementarity of shape and means (41, 121) for angular indexing of the two elements, this method being **characterised by** the following successive steps during which:
- the two elements (1,3) are brought one towards the other by positioning them in an approximate manner,
- the two elements (1, 3) are engaged one around the other by making them substantially co-axial by cooperation of the exterior stepped face of one (1, 3) of the elements with the interior stepped face in a complementary manner to the other (3, 1),
- one (1, 3) of the elements is adjusted in rotation about the fitting axis (X - X) relative to the other (3, 1) until the parts of the angular indexing means (41, 121) respectively carried by these elements cooperate one with the other,
- one (1, 3) of the elements is displaced relative to the other (3, 1), following a rectilinear movement parallel to the fitting axis (X - X) until the parts of the error-prevention means (23, 42, 212A to 212I) respectively carried by these two elements cooperate one with the other, and
- if said respective parts of the error-prevention means (23, 42, 212A to 212I) are complementary one with the other, the rectilinear displacement (E) of one (1, 3) of the elements relative to the other (3, 1) is followed in the same direction.

10. Method according to claim 9, **characterised in that**, during the step of bringing the two elements (1, 3) together, one of the elements is positioned angularly in an approximate manner relative to the other whilst, following overall the fitting axis (X - X), complying with an aiming member (313) carried by one (3) of the elements relative to an associated pin (111) carried by the other element (1).

## Patentansprüche

1. Kupplung (5) für die lösbare Verbindung von zwei Leitungen umfassend zwei Elemente (1, 3), die geeignet sind, entsprechend einer Eingreifachse (X-X) ineinander zugreifen, und Mittel zur Unverwechselbarkeit (23, 42, 212A bis 212I), die von den zwei Elementen getragen werden und angepasst sind, die zwei Elemente durch Komplementarität der Formen paarweise zusammenzubringen, **dadurch gekennzeichnet, dass** sie darüber hinaus Mittel (41, 121) zur winkelmäßigen Verriegelung der zwei Elemente (1, 3) umfasst, die von den zwei Elementen getragen werden und geeignet sind, die zwei Elemente zueinander winkelmäßig zu positionieren, bevor die Mittel zur Unverwechselbarkeit (23, 42, 212A bis 2121), die zumindest teilweise mit den zwei Elementen (1, 3) in lösbarer und konfigurierbarer Weise verbunden sind, miteinander bei dem Eingreifen dieser Elemente zusammenwirken.

2. Kupplung nach Anspruch 1, **dadurch gekennzeichnet, dass** die Mittel zur Unverwechselbarkeit umfassen:
- mindestens eine Erhöhung (42), die ausgebildet ist, um in lösbarer Weise mit einem ersten (3) der zwei Elemente (1, 3) verbunden zu werden,
- für jede Erhöhung (42) eine Zone (212A bis 212I) für den Durchgang der Erhöhung bei dem Ineinandergreifen der Elemente (1, 3), die von dem zweiten Element (1) getragen werden, und
- Mittel (23) zum selektiven Verschließen der oder jeder Durchgangszone (212A bis 212I), die ausgebildet sind, um in lösbarer Weise mit dem zweiten Element (1) verbunden zu werden.

3. Kupplung nach Anspruch 2, **dadurch gekennzeichnet, dass** die oder jede Erhöhung (42) eine lang gestreckte Form entsprechend der Eingreifachse (X-X) aufweist.

4. Kupplung nach einem der Ansprüche 2 oder 3, **dadurch gekennzeichnet, dass** die oder jede Durchgangszone (212A bis 2121) zumindest teilweise von einem Teil (21) begrenzt wird, das in lösbarer Weise auf dem zweiten Element aufgesetzt ist.

5. Kupplung nach einem der Ansprüche 2 bis 4, **dadurch gekennzeichnet, dass** die Mittel (23) zum Verschließen für jede zu verschließende Durchgangszone (212A bis 212I) einen zugeordneten Verschluss (23), insbesondere in Kugelform umfassen, wobei die Durchgangszone in Form eines Hohlraums (212A bis 212I) zur axialen Aufnahme und radialen und orthoradialen Festlegung des Verschlusses ausgebildet ist.

6. Kupplung nach einem beliebigen der Ansprüche 2 bis 5, **dadurch gekennzeichnet, dass** die Mittel (23) zum Verschießen mindestens eine Abstützfläche (23a) auf dem zweiten Element (1) definieren, wobei die Fläche sich einer Bewegung entsprechend einer zur Eingreifachse (X-X) im Wesentlichen parallelen Achse entgegenstellt.

7. Kupplung nach einem beliebigen der Ansprüche 2 bis 6, **dadurch gekennzeichnet, dass** die Mittel zur winkelmäßigen Verriegelung mindestens eine mit dem ersten Element (3) verbundene Erhöhung (41) umfassen, von der mindestens ein Bereich (41a), der Eingreifachse (X-X) folgend, in Bezug auf die oder jede Unverwechselbarkeitserhöhung (42) versetzt ist.

8. Kupplung nach einem beliebigen der vorhergehenden Ansprüche, **dadurch gekennzeichnet, dass** die zwei Elemente (1, 3) im ganzen gesehen eine Rohrform aufweisen und dass die Außenfläche eines (1) der Elemente in einer zur gestuften Innenfläche des anderen Elements (3) im Wesentlichen komplementären Weise gestuft ist, derart, dass bei dem Ineinandergreifen der Elemente die gestuften Flächen zusammenwirken, um die zwei Element im Wesentlichen koaxial zu machen.

9. Verfahren zum Verbinden von zwei Elementen einer Kupplung nach einem beliebigen der Ansprüche 1 bis 8, wobei die Elemente geeignet sind, entsprechend einer Eingreifachse (X-X) ineinanderzugreifen, und wobei die Elemente im Wesentlichen rohrförmig ausgebildet sind und Mittel (23, 42, 212A bis 212I) zur Unverwechselbarkei,t die angepasst sind, um die zwei Elemente durch Komplementarität der Formen paarweise zusammenzubringen, und Mittel (41, 121) zur winkelmäßigen Verriegelung der zwei Elemente tragen, wobei dieses Verfahren durch die folgenden aufeinander folgenden Schritte **gekennzeichnet** ist, während denen:
- man die zwei Elemente (1, 3) zueinander annähert, wobei man sie in approximativer Weise zueinander positioniert,
- man die zwei Elemente (1, 3) eines um das andere herum in Eingriff treten lässt, wobei man sie im Wesentlichen koaxial durch Zusammenwirken der gestuften Außenfläche eines (1, 3) der Elemente mit der in komplementärer Weise zum anderen (3, 1) gestuften Innenfläche ausrichtet,
- man durch Drehung um die Eingreifachse (X-X) eines (1, 3) der Elemente in Bezug auf das andere (3, 1) einstellt bis die Teile der Mittel (41, 121)) zur winkelmäßigen Verriegelung, die jeweils von diesen Elementen getragen werden, miteinander zusammenwirken und
- man eines s(1, 3) der Elemente in Bezug auf das andere (3, 1), einer geradlinigen Bewegung parallel zur Eingreifachse (X-X) folgend verschiebt bis die Teile der Mittel (23, 42, 212A bis 212I) zur Unverwechselbarkeit, die jeweils von diesen zwei Elementen getragen werden, miteinander zusammenwirken,
- wenn die jeweiligen Teile der Mittel (23, 42, 212a bis 212I) zur Unverwechselbarkeit komplementär zueinander sind, man in der gleichen Richtung die geradlinige Verschiebung (E) eines (1, 3) der Elemente in Bezug auf das andere fortsetzt.

10. Kupplung nach Anspruch, **dadurch gekennzeichnet, dass** bei dem Schritt der Annäherung der beiden Elemente (1, 3) man winkelmäßig in approximativer Weise eines der Elemente in Bezug auf das andere positioniert, indem man, im Wesentlichen der Eingreifachse (X-X) folgend, ein von einem (3) der Elemente getragenes Zielorgan (313) in Bezug auf einen zugeordneten Ansatz (111), der von dem anderen Element (1) getragen wird, beobachtet.
